# FASCICULE DE BREVET EUROPEEN

(11) **EP 3 984 883 B1**
(45) Date de publication et mention de la délivrance du brevet: **15.02.2023**
(21) Numéro de dépôt: 21197251.8
(22) Date de dépôt: 16.09.2021
(51) Int. Cl.: B64C 27/467

(54) **METHODE D'AMELIORATION DU COMPORTEMENT AERODYNAMIQUE DE PALES D'UN GIRAVION EN VOL STATIONNAIRE PAR UN DEPLACEMENT DU BORD D'ATTAQUE DES PROFILS AERODYNAMIQUES DE CES PALES**
VERFAHREN ZUR VERBESSERUNG DES AERODYNAMISCHEN VERHALTENS DER BLÄTTER EINES DREHFLÜGELFLUGZEUGS IM SCHWEBEFLUG DURCH VERSCHIEBUNG DER VORDERKANTE DER AERODYNAMISCHEN PROFILE DIESER BLÄTTER
METHOD FOR IMPROVING THE AERODYNAMIC PERFORMANCE OF BLADES OF A HOVERING ROTORCRAFT BY MOVEMENT OF THE LEADING EDGE OF THE AERODYNAMIC PROFILES OF THESE BLADES

(30) Priorité: 13.10.2020 FR 2010434
(43) Date de publication de la demande: 20.04.2022
(73) Titulaire: Airbus Helicopters, 13725 Marignane Cedex (FR)
(72) Inventeur: KELAIDIS, Manousos, 13007 MARSEILLE (FR)
(74) Mandataire: GPI Brevets

(56) Documents cités:
- EP-A1- 3 527 487
- US-A- 1 623 420
- US-A- 4 248 572
- US-A- 5 879 131

## Description

La présente invention est du domaine des profils aérodynamiques de pales et plus particulièrement des pales destinées à un rotor de sustentation d'un giravion.

La présente invention concerne une méthode d'amélioration d'une pale permettant d'augmenter les performances aérodynamiques de la pale en vol stationnaire ainsi qu'une telle pale améliorée. Cette pale améliorée est destinée à équiper un rotor d'un aéronef, en particulier un rotor de sustentation d'un giravion.

Un giravion, désigné également « aéronef à voilure tournante », comporte traditionnellement un fuselage et au moins un rotor de sustentation entraîné en rotation par une installation motrice et assurant au moins partiellement la sustentation et/ou la propulsion du giravion. Le giravion peut aussi comporter un dispositif anticouple s'opposant au couple en lacet exercé par le rotor de sustentation sur le fuselage de ce giravion et pour permettre également de contrôler les mouvements en lacet de ce giravion.

Classiquement, une pale s'étend longitudinalement selon son envergure d'une première extrémité vers une deuxième extrémité. On remarque que le terme « longitudinal » se comprend comme au sens de l'envergure de la pale. De plus, la pale s'étend transversalement d'un bord d'attaque vers un bord de fuite, selon les cordes de la pale.

La pale comprend notamment un revêtement extérieur muni d'une première peau au niveau de son extrados et d'une seconde peau au niveau de son intrados ainsi que de sections transversales successives. Chaque section transversale est définie par un profil aérodynamique comportant deux demi-profils, à savoir un demi-profil d'intrados et un demi-profil d'extrados.

Des profils aérodynamiques existants et utilisés fréquemment pour les pales des rotors d'aéronefs sont par exemple définis selon les familles NACA ou bien les familles OA, les familles OA étant par exemple décrites dans les documents FR 2626841 et FR 2765187.

Une pale est destinée à être fixée à un moyeu tournant d'un rotor au niveau de sa première extrémité, sa deuxième extrémité étant dite extrémité libre. Ce moyeu tournant du rotor entraîne en rotation chaque pale. Par rapport à l'axe de rotation du rotor, on comprend que la pale s'étend radialement de la première extrémité vers la deuxième extrémité.

Chaque pale d'un rotor fournit, sous l'effet d'un écoulement d'air généré par la rotation du rotor, une force aérodynamique, désignée généralement poussée. Cette force aérodynamique est notamment variable selon un angle d'incidence aérodynamique de la pale, à savoir un angle entre l'écoulement d'air et une droite reliant le bord d'attaque et le bord de fuite de ce profil aérodynamique correspondant à la corde de ce profil aérodynamique. Pour un rotor, cet angle d'incidence est généralement modifié en faisant tourner la pale autour d'un axe de variation de pas de la pale. Cet axe de variation de pas s'étend sensiblement longitudinalement selon l'envergure de la pale. Par la suite, on utilisera le terme « incidence » pour désigner plus simplement l'angle d'incidence aérodynamique de la pale.

En conséquence, chaque pale d'un rotor de sustentation est définie pour fournir de façon optimale une force aérodynamique, chaque pale fonctionnant alors avec une incidence positive.

Par ailleurs, la cambrure d'un profil aérodynamique est une caractéristique égale à la distance entre d'une part la corde du profil aérodynamique et d'autre part une ligne de demi-épaisseur ou « ligne moyenne » de ce profil aérodynamique, c'est-à-dire se trouvant à équidistance des demi-profils d'intrados et d'extrados par rapport à chaque normale à la ligne moyenne. La distance entre la corde et la ligne moyenne est prise perpendiculairement à la corde et, par suite, une augmentation positive de cambrure correspond à une augmentation positive de ladite distance. En particulier, une cambrure est nulle lorsque le profil aérodynamique est symétrique. A contrario, un profil aérodynamique avec une cambrure non nulle est un profil aérodynamique asymétrique.

L'augmentation positive de la cambrure des profils aérodynamiques d'une pale à proximité du bord d'attaque a pour effet d'augmenter l'incidence positive de décrochage de cette pale. De fait, l'incidence positive de la pale peut être augmentée lors sa rotation, augmentant en conséquence la force aérodynamique générée par la pale et ses performances aérodynamiques.

Entre outre, un giravion peut évoluer aussi bien avec des vitesses d'avancement élevées lors de vols de croisière qu'avec de très faibles vitesses d'avancement et peut réaliser des vols stationnaires. Cependant, lors d'un vol stationnaire, une trainée aérodynamique significative peut apparaître au niveau de l'extrémité libre de la pale, où la vitesse de l'écoulement d'air est la plus importante. Cette trainée aérodynamique peut également augmenter rapidement avec l'augmentation de l'incidence des pales à cause d'un phénomène particulier qui est lié à la compressibilité de l'air et à l'apparition d'ondes de choc proches du bord d'attaque des profils aérodynamiques, à proximité de l'extrémité libre de la pale. Ces ondes de choc se forment à la surface supérieure des profils et provoquent la séparation de la couche limite. Il peut en résulter un décrochage aérodynamique.

Pour une incidence importante de la pale, de l'ordre de 5 à 7 degrés (5 à 7°), et une vitesse de l'écoulement d'air à l'extrémité libre de la pale supérieure ou égale 0.6 Mach, la traînée aérodynamique à proximité de cette extrémité libre de la pale est augmentée de façon importante, en étant par exemple multipliée par 10.

Le nombre de Mach est un nombre sans dimension exprimant la vitesse d'un objet dans son environnement divisée par la vitesse du son dans cet environnement. La vitesse du son dans un gaz variant avec sa nature et sa température, le nombre de Mach dépend des conditions locales de température et de pression atmosphérique notamment.

Afin de tenter de limiter ce phénomène, le document « Aerodynamic Characteristics of NPL 9626 and NPL 9627, Further Aerofoils Designed for Helicopter Rotor Use » de P.G. Wilby, N. Gregory and V.G. Quincey, Aerodynamics Division, NPL, publié en 1973, décrit une pale d'un rotor de sustentation pour giravion comportant des profils aérodynamiques modifiés au niveau de leurs bords d'attaque. Les bords d'attaque des profils aérodynamiques ont été légèrement abaissés, de l'ordre de 1% à 1.5% de la corde c de ces profils aérodynamiques.

En outre, l'hélicoptère connu sous la dénomination UH-60A comporte un rotor de sustentation muni de pales avec un vrillage important au niveau de l'extrémité libre de chaque pale.

Les documents EP 3527487, US 1623420, US 5879131 et US 4248572 appartiennent à l'arrière plan technologique de l'invention.

Dans ces conditions, la présente invention propose une méthode d'amélioration d'une pale permettant de s'affranchir des limitations mentionnées ci-dessus et de modifier les profils aérodynamiques d'une pale existante afin d'obtenir des performances aérodynamiques, en vol stationnaire, supérieures aux performances aérodynamiques de cette pale existante.

Une pale s'étend selon une direction longitudinale en envergure d'une première extrémité à une seconde extrémité et selon une direction transversale d'un bord d'attaque vers un bord de fuite. La pale comporte des sections transversales successives, chaque section transversale étant définie par un profil aérodynamique, chaque profil aérodynamique étant défini notamment par deux demi-profils incluant un demi-profil d'extrados et un demi-profil d'intrados, les deux demi-profils comportant chacun un tronçon de bord d'attaque, un tronçon intermédiaire et un tronçon de bord de fuite. Pour chaque profil, les tronçons de bord d'attaque débutent au bord d'attaque, les tronçons de bord de fuite se terminent au bord de fuite et les tronçons intermédiaires sont situés respectivement entre les tronçons de bord d'attaque et les tronçons de bord de fuite correspondant.

Cette pale est destinée à être reliée à un moyeu tournant d'un rotor au niveau de la première extrémité de la pale par l'intermédiaire d'un pied de pale, la seconde extrémité étant destinée à être libre.

La méthode d'amélioration d'une pale selon l'invention comporte les étapes suivantes :
- définition d'un segment de droite reliant le bord d'attaque et le bord de fuite du profil aérodynamique,
déplacement du bord d'attaque des profils aérodynamiques situés sur une zone extrémale en envergure de la pale comportant la seconde extrémité, le déplacement étant réalisé du demi-profil d'extrados vers le demi-profil d'intrados sur une première distance *d1* perpendiculairement au segment de droite,
- modification des tronçons de bord d'attaque des deux demi-profils, raccordant le bord d'attaque aux tronçons intermédiaires des deux demi-profils sur la zone extrémale, et
- fabrication de la pale selon les profils aérodynamiques modifiés.

Le segment de droite est défini entre le bord d'attaque et le bord de fuite du profil aérodynamique. Ce segment de droite a une longueur égale à la corde c du profil aérodynamique. En effet, pour rappel, la corde c d'un profil aérodynamique est égale à une distance entre le bord d'attaque et le bord de fuite de ce profil aérodynamique.

Ensuite, le déplacement du bord d'attaque des profils aérodynamiques situés dans la zone extrémale en envergure de la pale est réalisé, provoquant une modification de la ligne moyenne de ces profils aérodynamiques depuis le demi-profil d'extrados vers le demi-profil d'intrados dans la zone du bord d'attaque. Ce déplacement du bord d'attaque de chaque profil aérodynamique sur la zone extrémale provoque ainsi une augmentation de la cambrure de ces profils aérodynamiques. Cette modification de la position du bord d'attaque de des profils aérodynamiques de la pale modifiée sur la zone extrémale et la modification de leurs lignes moyennes qui s'en suit permettent de modifier l'écoulement d'air sur les deux demi-profils de la pale modifiée dans la zone extrémale en envergure de la pale, en particulier en provoquant une accélération plus progressive de l'écoulement d'air sur le demi-profil d'extrados. En conséquence, l'incidence de décrochage de la pale modifiée est augmentée dans cette zone extrémale en envergure de la pale, permettant par la suite de retarder l'apparition des ondes de choc et, de fait, de réduire significativement la trainée aérodynamique dans cette zone extrémale en envergure de la pale, notamment en vol stationnaire ou en vol à faibles vitesses d'avancement.

De fait, les performances aérodynamiques de cette pale modifiée sont améliorées en vol stationnaire ou en vol à faibles vitesses d'avancement.

La première distance *d1* est par exemple comprise entre 2% et 8% de la corde *c* du profil aérodynamique afin de ne pas modifier de façon importante le comportement aérodynamique de la pale modifiée dans les phases de vol autres que le vol stationnaires et en particulier les performances aérodynamiques sous des incidences positives. Eventuellement, la première distance *d1* est comprise entre 2.5% à 5% de la longueur de la corde *c.*

Suite à ce déplacement du bord d'attaque des profils aérodynamiques situés dans la zone extrémale, le tronçon de bord d'attaque du demi-profil d'extrados et le tronçon de bord d'attaque du demi-profil d'intrados sont modifiés afin de raccorder le bord d'attaque déplacé avec respectivement le tronçon intermédiaire du demi-profil d'extrados et le tronçon intermédiaire du demi-profil d'intrados.

Chaque tronçon de bord d'attaque sur la zone extrémale est modifié de sorte que sa tangence évolue de façon continue et ne comporte de préférence aucun point d'inflexion. Chaque tronçon de bord d'attaque modifié débute au bord d'attaque et se termine respectivement à un tronçon intermédiaire de sorte à être tangent à ce tronçon intermédiaire.

Lors de l'étape de modification des tronçons de bord d'attaque des profils aérodynamiques sur ladite zone extrémale, les points définissant les tronçons de bord d'attaque initiaux des deux demi-profils d'extrados et d'intrados peuvent être déplacés selon une loi parabolique, à savoir un polynôme de degré 2, pour former les tronçons de bord d'attaque modifiés des deux demi-profils d'extrados et d'intrados.

Les tronçons de bord d'attaque modifiés des deux demi-profils d'extrados et d'intrados peuvent également être définis par des polynômes de degré 3, et ne comportent aucun point d'inflexion.

Le tronçon de bord d'attaque d'un profil aérodynamique peut couvrir une deuxième distance *d2* parallèlement au segment de droite depuis le bord d'attaque comprise entre 5% et 50% de la corde c de ce profil aérodynamique.

En outre, uniquement les profils aérodynamiques situés dans la zone extrémale en envergure de la pale sont modifiés afin d'une part d'améliorer le comportement aérodynamique de la pale dans cette zone extrémale et d'autre part de ne pas modifier le comportement aérodynamique de la pale sur les autres zones de la pale. La zone extrémale en envergure de la pale peut par exemple couvrir une troisième distance *d3* en envergure comprise entre 10% et 25% du rayon de la pale. Ce rayon de la pale est égal à la distance entre le centre de rotation de la pale, à savoir l'axe de rotation du moyeu du rotor équipé de la pale, et la seconde extrémité. Eventuellement, la troisième distance *d3* est comprise entre 12% et 18% du rayon de la pale.

Enfin, la méthode d'amélioration d'une pale selon l'invention comporter l'étape de fabrication d'une pale visant à fabriquer une pale définie par les profils aérodynamiques modifiés telles que précédemment décrits.

La méthode d'amélioration d'une pale selon la présente invention peut également comporter les étapes suivantes réalisées avant l'étape de fabrication :
- déplacement du bord de fuite des profils aérodynamiques sur la zone extrémale en envergure de la pale, le déplacement étant réalisé du demi-profil d'intrados vers le demi-profil d'extrados sur une quatrième distance *d4* perpendiculairement au segment de droite, et
- modification des tronçons de bord de fuite des deux demi-profils raccordant les tronçons intermédiaires des deux demi-profils au bord de fuite sur la zone extrémale.

Ce déplacement du bord de fuite des profils aérodynamiques sur la zone extrémale permet de générer un léger braquage vers le haut du profil aérodynamique à proximité du bord de fuite. Ce léger braquage permet avantageusement de compenser un moment à piquer pouvant être généré par le déplacement du bord d'attaque. La quatrième distance *d4* est par exemple comprise pour chaque profil aérodynamique entre 1% et 2% de la corde c de ce profil aérodynamique.

Suite à ce déplacement du bord de fuite des profils aérodynamiques situés dans la zone extrémale, le tronçon de bord de fuite du demi-profil d'extrados et le tronçon de bord de fuite du demi-profil d'intrados sont modifiés afin de raccorder le bord de fuite déplacé avec respectivement le tronçon intermédiaire du demi-profil d'extrados et le tronçon intermédiaire du demi-profil d'intrados.

Chaque tronçon de bord de fuite est modifié sur la zone extrémale de sorte que sa tangence évolue de façon continue et ne comporte de préférence aucun point d'inflexion. Chaque tronçon de bord de fuite modifié débute respectivement à un tronçon intermédiaire en étant tangent à ce tronçon intermédiaire et se termine au bord de fuite.

Lors de l'étape de modification des tronçons de bord de fuite des profils aérodynamiques sur ladite zone extrémale, les points définissant les tronçons de bord de fuite initiaux des deux demi-profils d'extrados et d'intrados peuvent être déplacés selon une courbe lisse et continue et par exemple selon une loi parabolique, à savoir un polynôme de degré 2, pour former les tronçons de bord de fuite modifiés des deux demi-profils d'extrados et d'intrados.

Les tronçons de bord de fuite modifiés des deux demi-profils d'extrados et d'intrados peuvent également être définis par des polynômes de degré 3 et ne comportent aucun point d'inflexion, ou peuvent présenter tout autre forme de courbe lisse et continue.

Le tronçon de bord de fuite d'un profil aérodynamique peut couvrir une cinquième distance *d5* parallèlement au segment de droite depuis le bord d'attaque comprise entre 5% et 20% de la corde c de ce profil aérodynamique. Eventuellement, la cinquième distance *d5* est comprise entre 8% et 15% du rayon de la pale.

Le déplacement du bord de fuite et la modification des tronçons de bord de fuite provoquent un braquage au niveau du bord de fuite de la pale dans la zone extrémale de l'ordre de 10° vers le haut.

La présente invention a aussi pour objet une pale modifiée, dite aussi « pale améliorée » dans ce texte, définie par les profils aérodynamiques modifiés par les étapes de la méthode d'amélioration d'une pale précédemment décrites. Cette pale est réalisée en utilisant ces profils aérodynamiques modifiés dans la zone extrémale en envergure de la pale.

La présente invention a également pour objet un rotor destiné à un aéronef, ce rotor comportant au moins deux pales améliorées telles que précédemment décrites, ces pales améliorées étant définies par les profils aérodynamiques modifiés par les étapes de la méthode d'amélioration d'une pale. Ce rotor est par exemple un rotor de sustentation destiné à un giravion.

La présente invention a également pour objet un giravion comportant un fuselage et au moins un rotor de sustentation. Ledit au moins un rotor de sustentation du giravion est un rotor de sustentation tel que précédemment décrit et comporte à ce titre au moins deux pales améliorée définies par des profils aérodynamiques modifiés par la méthode d'amélioration d'une pale précédemment décrite.

L'invention et ses avantages apparaîtront avec plus de détails dans le cadre de la description qui suit avec des exemples donnés à titre illustratif en référence aux figures annexées qui représentent :
- la figure 1, un giravion muni de pales,
- la figure 2, une pale,
- la figure 3, un schéma synoptique d'une méthode d'amélioration d'une pale,
- la figure 4, un schéma de modification d'un tronçon de bord d'attaque d'un profil aérodynamique d'une pale, et
- la figure 5, quatre profils aérodynamiques modifiés d'une pale.

Les éléments présents dans plusieurs figures distinctes sont affectés d'une seule et même référence.

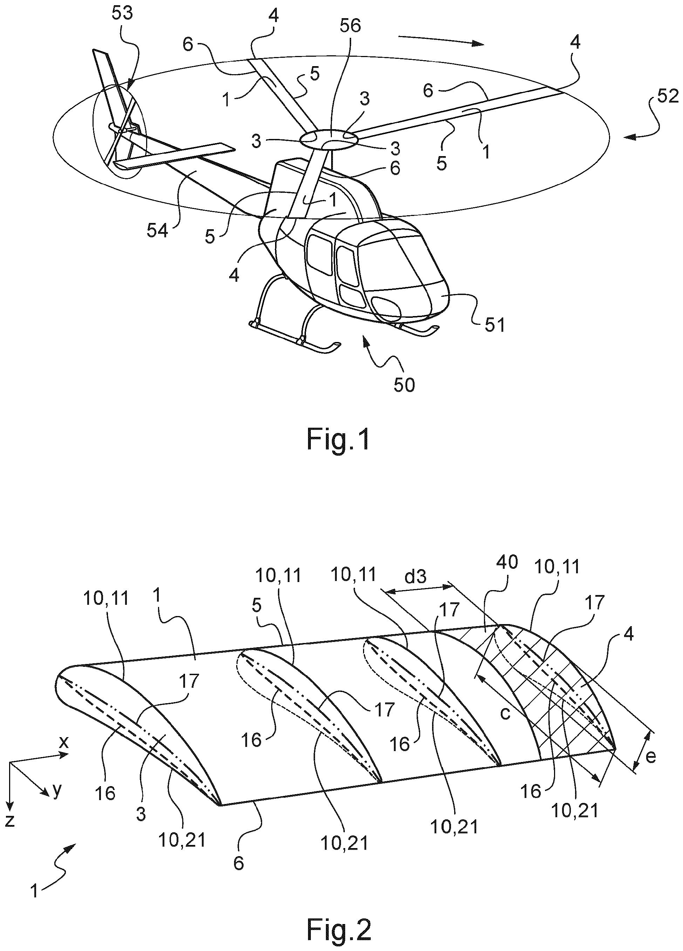

Un giravion 50 représenté sur la figure 1 comporte un fuselage 51 et un rotor de sustentation 52. Le giravion 50 peut en outre comporter par exemple un rotor auxiliaire anticouple 53 agencé sur une poutre de queue 54. Le rotor de sustentation 52 comporte au moins deux pales 1. Chaque pale 1 s'étend en envergure d'une première extrémité 3 jusqu'à une seconde extrémité 4 et transversalement d'un bord d'attaque 5 vers un bord de fuite 6. La première extrémité 3 est reliée par exemple à un moyeu 56 du rotor de sustentation 52 alors que la seconde extrémité 4 est libre.

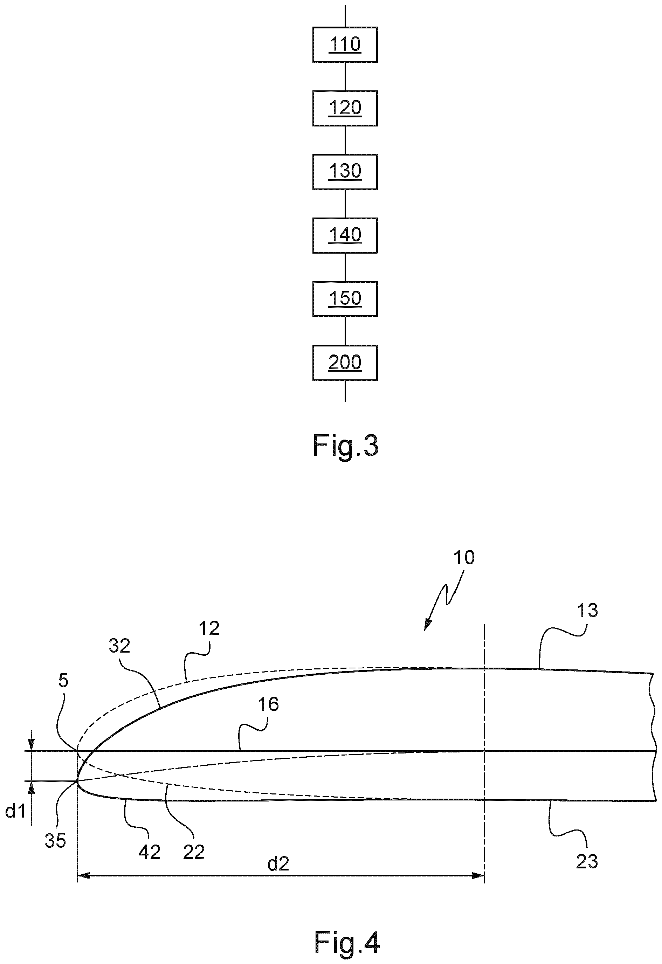

Une pale 1 est représentée sur la figure 2. Un repère (X,Y,Z) est représenté sur la figure 3. Ce repère comporte une direction longitudinale X, une direction transversale Y et une direction verticale Z, ces trois directions étant perpendiculaires entre elles. La direction longitudinale X est sensiblement parallèle à un axe de variation de pas de la pale 1, voire confondue avec lui.

La pale 1 s'étend selon la direction longitudinale X en envergure de la première extrémité 3 jusqu'à la seconde extrémité 4 et selon la direction transversale Y du bord d'attaque 5 vers le bord de fuite 6. La pale 1 comporte des sections transversales successives dans un plan transversal parallèle aux directions transversale Y et verticale Z, chaque section transversale étant définie notamment par un profil aérodynamique 10 comportant notamment deux demi-profils 11,21, à savoir un demi-profil d'extrados 11 et un demi-profil d'intrados 21. Le demi-profil d'extrados 11 et le demi-profil d'intrados 21 comportent respectivement un tronçon de bord d'attaque 12,22 débutant au bord d'attaque 5, un tronçon de bord de fuite 14,24 se terminant au bord de fuite 6 et un tronçon intermédiaire 13,23 situé entre le tronçon de bord d'attaque 12,22 et le tronçon de bord de fuite 14,24.

Les profils aérodynamiques 10 de ces sections transversales évoluent généralement selon leur position en envergure sur la pale 1 et peuvent donc être différents afin notamment d'être adaptés à l'écoulement d'air reçu par chaque section transversale lors de la rotation de la pale 1.

Sur la figure 2 est également représentée une ligne de demi-épaisseur ou « ligne moyenne » 17 du profil aérodynamique 10. Cette ligne moyenne 17 est équidistante des demi-profils d'intrados 21 et d'extrados 11 perpendiculairement à la ligne moyenne 17. On constate que les profils aérodynamiques 10 de la pale 1 sont asymétriques et comportent une cambrure, cette ligne moyenne 17 étant courbe. Un segment de droite 16 reliant le bord d'attaque 5 et le bord de fuite 6 est également représenté sur la figure 2 pour plusieurs profils aérodynamiques 10. Ce segment de droite 16 a une longueur égale à la corde c du profil aérodynamique 10.

Sur la figure 2 est également représentée une zone extrémale 40. Cette zone extrémale 40 s'étend en envergure de la pale 1 à proximité de la seconde extrémité 4 libre de la pale 1 et comporte cette seconde extrémité 4. Cette zone extrémale 40 couvre transversalement la totalité de la pale 1, du bord d'attaque 5 au bord de fuite 6.

La figure 3 représente le schéma synoptique d'une méthode d'amélioration d'une pale initiale pour constituer une pale modifiée dite « pale améliorée » à partir d'une pale à améliorer existante, cette méthode comprenant plusieurs étapes. Cette méthode est destinée à être appliquée à des pales, par exemple destinées à équiper un rotor de sustentation, et dont les sections transversales successives sont formées par des profils aérodynamiques existants, par exemple mais non exclusivement selon les familles *NACA* ou bien les familles *OA.*

Une étape de définition 110 d'un segment de droite 16 est tout d'abord réalisée, le segment de droite 16 reliant le bord d'attaque 5 au bord de fuite 6 d'un profil aérodynamique 10 situé sur la zone extrémale 40 est défini.

Ensuite, une étape 120 de déplacement du bord d'attaque 5 est réalisée, les bords d'attaque 5 des profils aérodynamiques 10 de la pale 1 situés sur la zone extrémale 40 étant déplacés du demi-profil d'extrados 11 vers le demi-profil d'intrados 21 sur une première distance *d1,* perpendiculairement au segment de droite 16.

Sur la figure 4, un tel déplacement du bord d'attaque 5 d'un profil aérodynamique 10 est représenté. Le profil aérodynamique 10 utilisé et modifié sur cette figure 3 est un profil aérodynamique *OA309.*

La première distance *d1* peut être comprise entre 2 % et 8% de la corde c du profil aérodynamique 10 par exemple.

Suite à ce déplacement du bord d'attaque 5, une étape de modification 130 des tronçons de bord d'attaque 12,22 des deux demi-profils 11,21 est réalisée. Durant cette étape 130, les demi-profils d'extrados 11 et d'intrados 21 de la pale 1 à améliorer sont modifiés afin de raccorder le bord d'attaque 5 respectivement aux deux tronçons intermédiaires 13,23 desdits deux demi-profils d'extrados 11 et d'intrados 21.

Comme représenté sur la figure 4, seuls le tronçon de bord d'attaque 12 du demi-profil d'extrados 11 et le tronçon de bord d'attaque 22 du demi-profil d'intrados 21 sont modifiés lors de cette étape de modification 130. Ces tronçons de bord d'attaque modifiés 32,42 des deux demi-profils 11,21 raccordent le bord d'attaque déplacé 35 aux tronçons intermédiaires 13,23 des deux demi-profils 11,21. Les tronçons intermédiaires 13,23 des deux demi-profils 11,21 sont inchangés, de même que les tronçons de bord de fuite 14,24.

Ces tronçons de bord d'attaque modifiés 32,42 relient le bord d'attaque déplacé 35 respectivement aux tronçons intermédiaires 13,23 de façon tangentielle. Les tronçons de bord d'attaque modifiés 32,42 ne comportent aucun point d'inflexion et ont une tangence évoluant de façon continue.

De la sorte, l'écoulement d'air sur les demi-profils 11,21 de la pale 1 sur la zone extrémale 40 est modifié et provoque une augmentation de l'incidence de décrochage de la pale 1 sur cette zone extrémale 40. En conséquence, les performances aérodynamiques de la pale 1 modifiée sont améliorées au regard de la pale initiale, au moins en vol stationnaire, en diminuant les traînées aérodynamiques sur cette zone extrémale 40.

Au cours de cette étape de modification 130, les points définissant les tronçons de bord d'attaque 12,22 initiaux des deux demi-profils d'extrados 11 et d'intrados 21 sont déplacés perpendiculairement au segment de droite 16, par exemple selon une loi parabolique afin de former les tronçons de bord d'attaque modifiés 32,42.

Le tronçon bord d'attaque 12,22 des deux demi-profils d'extrados 11 et d'intrados 21 d'un profil aérodynamique 10 peut couvrir par exemple une deuxième distance *d2* parallèlement au segment de droite 16 depuis le bord d'attaque 5 comprise entre 5% et 50% de la corde *c* de ce profil aérodynamique 10.

De plus, la zone extrémale 40 couvre par exemple une troisième distance *d3* en envergure comprise entre 10% et 25% du rayon de la pale.

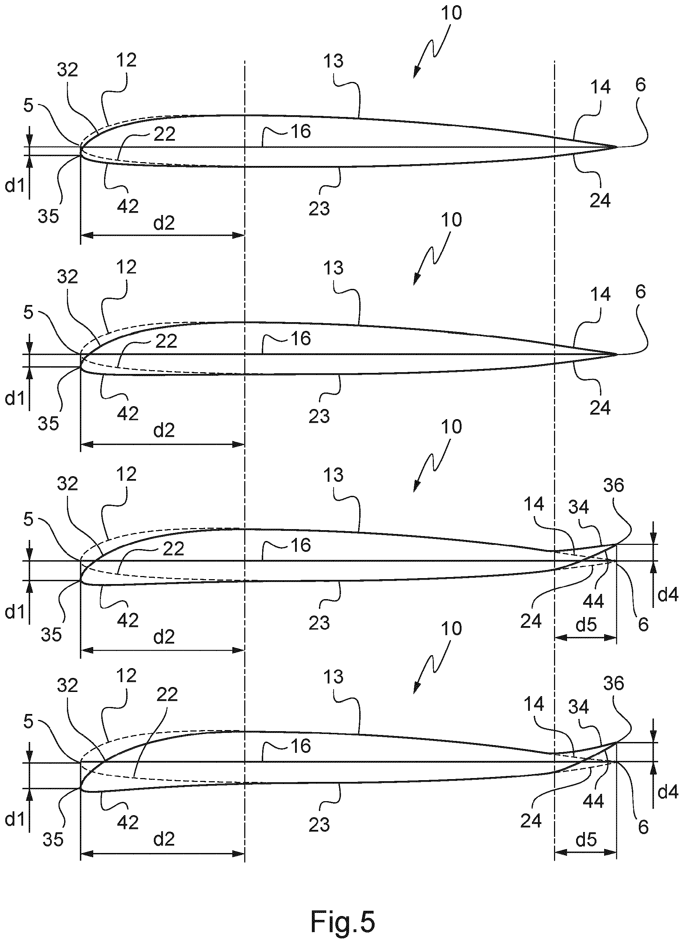

La figure 5 représente quatre exemples de profils aérodynamiques 10 modifiés par le procédé selon l'invention à partir d'un même profil aérodynamique. Ces quatre profils aérodynamiques 10 sont construits sur la base d'un un profil aérodynamique *OA309* et modifiés pour des valeurs de la première distance *d1* différentes et pour une même valeur de la deuxième distance *d2* égale à 30% de la corde *c* par exemple.

La méthode d'amélioration d'une pale 1 selon l'invention comporte enfin une étape de fabrication 200 d'une pale 1 visant à fabriquer une pale 1 définie par les profils aérodynamiques 10 modifiés lors des étapes précédentes.

La méthode d'amélioration d'une pale 1 selon l'invention peut également comporter deux étapes complémentaires réalisées avant l'étape de fabrication 200.

Au cours d'une étape de déplacement 140 du bord de fuite 6 des profils aérodynamiques 10 sur la zone extrémale 40, le déplacement du bord de fuite 6 de ces profils aérodynamiques 10 est réalisé du demi-profil d'intrados 21 vers le demi-profil d'extrados 11 sur une quatrième distance *d4* perpendiculairement au segment de droite 16. Ce déplacement du bord de fuite 6 est visible sur les deux derniers profils aérodynamiques 10 représentés sur la figure 5.

Suite à ce déplacement du bord de fuite 6 sur la zone extrémale 40, une étape de modification 150 des tronçons de bord de fuite 14,24 des deux demi-profils d'extrados 11 et d'intrados 21 est réalisée afin de raccorder les deux tronçons intermédiaires 13,23 des deux demi-profils d'extrados 11 et d'intrados 21 au bord de fuite déplacé 36.

Comme pour les tronçons de bord d'attaque modifiés 32,42, les tronçons de bord de fuite modifiés 34,44 relient le bord de fuite déplacé 36 respectivement aux tronçons intermédiaires 13,23 de façon tangentielle, et sans comporter de point d'inflexion et avec une tangence évoluant de façon continue.

Au cours de cette étape de modification 150, les points définissant les tronçons de bord de fuite 14,24 initiaux des deux demi-profils d'extrados 11 et d'intrados 21 sont déplacés perpendiculairement au segment de droite 16, par exemple selon une loi parabolique afin de former les tronçons de bord de fuite modifiés 34,44.

De la sorte, l'écoulement d'air sur les demi-profils 11,21 de la pale 1, sur la zone extrémale 40 est modifié, provoquant une augmentation de l'incidence de décrochage de la pale 1 sur cette zone extrémale 40 et par suite une amélioration des performances aérodynamiques de la pale 1 modifiée au regard de la pale initiale, au moins lors ses vols stationnaires.

La quatrième distance *d4* est par exemple comprise pour chaque profil aérodynamique 10 entre 1% et 2% de la corde c de ce profil aérodynamique. Chaque tronçon de bord de fuite 14,24 couvre par exemple une cinquième distance *d5* parallèlement au segment de droite 16 comprise entre 5% et 20% de la corde c du profil aérodynamique 10.

Ce déplacement du bord de fuite 6 des profils aérodynamiques 10 permet de générer un léger braquage de la pale 1 sur la zone extrémale 40 vers le haut à proximité du bord de fuite 6. Ce léger braquage, de l'ordre par exemple de 10°, permet avantageusement de compenser un moment à piquer pouvant être généré par le déplacement du bord d'attaque 5.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un autre moyen sans sortir du cadre de la présente invention défini par les revendications suivantes.

## Revendications

1. Méthode d'amélioration d'une pale (1), ladite pale (1) s'étendant selon une direction longitudinale (X) en envergure d'une première extrémité (3) à une seconde extrémité (4) et selon une direction transversale (Y) d'un bord d'attaque (5) vers un bord de fuite (6), ladite pale (1) comportant des sections transversales successives, chaque section transversale étant définie par un profil aérodynamique (10), chaque profil aérodynamique (10) étant défini par deux demi-profils (11,21) incluant un demi-profil d'extrados (11) et un demi-profil d'intrados (21), lesdits deux demi-profils (11,21) comportant chacun un tronçon de bord d'attaque (12,22), un tronçon intermédiaire (13,23) et un tronçon de bord de fuite (14,24), ladite première extrémité (3) étant destinée à être reliée à un moyeu (56) d'un rotor (52), ladite seconde extrémité (4) étant destinée à être libre,
**caractérisée en ce que** ladite méthode comporte les étapes suivantes :
- définition (110) d'un segment de droite (16) reliant ledit bord d'attaque (5) et ledit bord de fuite (6) dudit profil aérodynamique (10),
- déplacement (120) dudit bord d'attaque (5) desdits profils aérodynamiques (10) situés sur une zone extrémale (40) en envergure de ladite pale (1) comportant ladite seconde extrémité (4), ledit déplacement (120) étant réalisé dudit demi-profil d'extrados (11) vers ledit demi-profil d'intrados (21) sur une première distance *d1* perpendiculairement audit segment de droite (16),
- modification (130) desdits tronçons de bord d'attaque (12,22) desdits deux demi-profils (11,21) raccordant ledit bord d'attaque (5) auxdits tronçons intermédiaires (13,23) desdits deux demi-profils (11,21) sur ladite zone extrémale (4), et
- fabrication (200) de ladite pale (1) selon lesdits profils aérodynamiques (10) modifiés.

2. Méthode selon la revendication 1,
**caractérisée en ce qu'**une corde c d'un profil aérodynamique (10) étant égale à une distance entre ledit bord d'attaque (5) et ledit bord de fuite (6) dudit profil aérodynamique (10), ladite distance *d1* est comprise pour chaque profil aérodynamique (10) sur ladite zone extrémale (40) entre 2% et 8% de ladite corde c dudit profil aérodynamique (10) et lesdits tronçons de bord d'attaque (12,22) couvrent une deuxième distance *d2* parallèlement audit segment de droite (16) depuis ledit bord d'attaque (5) comprise entre 5% et 50% de ladite corde c.

3. Méthode selon l'une quelconque des revendications 1 à 2,
**caractérisée en ce que** ladite zone extrémale (40) en envergure de ladite pale (1) couvre une troisième distance *d3* en envergure comprise entre 10% et 25% d'un rayon de ladite pale (1), ledit rayon étant égal à la distance entre le centre de rotation de ladite pale (1) et ladite seconde extrémité (4).

4. Méthode selon l'une quelconque des revendications 1 à 3,
**caractérisée en ce que** lors de ladite étape de modification (130) desdits tronçons de bord d'attaque (12,22) desdits deux demi-profils (11,21), lesdits tronçons de bord d'attaque (12,22) modifiés sont définis par un polynôme de degré 3 et ne comportent aucun point d'inflexion.

5. Méthode selon l'une quelconque des revendications 1 à 4,
**caractérisée en ce que** lors de ladite étape de modification (130) desdits tronçons de bord d'attaque (12,22) desdits profils aérodynamiques (10) sur ladite zone extrémale (40), les points définissant lesdits tronçons de bord d'attaque (12,22) desdits deux demi-profils (11,21) sont déplacés selon une loi parabolique.

6. Méthode selon l'une quelconque des revendications 1 à 5,
**caractérisée en ce que** ladite méthode comporte les étapes suivantes réalisées avant l'étape de fabrication (200) :
- déplacement (140) dudit bord de fuite (6) desdits profils aérodynamiques (10) sur ladite zone extrémale (40) en envergure de ladite pale (1), ledit déplacement (140) dudit bord de fuite (6) desdits profils aérodynamiques (10) sur ladite zone extrémale (40) étant réalisé dudit demi-profil d'intrados (21) vers ledit demi-profil d'extrados (11) sur une quatrième distance *d4* perpendiculairement audit segment de droite (16), et
- modification (150) desdits tronçons de bord de fuite (14,24) desdits deux demi-profils (11,21) raccordant lesdits tronçons intermédiaires (13,23) desdits deux demi-profils (11,21) audit bord de fuite (6) sur ladite zone extrémale (4).

7. Méthode selon la revendication 6,
**caractérisée** en ce ladite quatrième distance *d4* est comprise pour chaque profil aérodynamique (10) sur ladite zone extrémale (40) entre 1% et 2% de ladite corde *c* dudit profil aérodynamique (10) et lesdits tronçons de bord de fuite (14,24) couvrent une cinquième distance *d5* parallèlement audit segment de droite (16) depuis ledit bord de fuite (6) comprise entre 5% et 20% de ladite corde c.

8. Méthode selon l'une quelconque des revendications 1 à 7,
**caractérisée en ce que** lors de ladite étape de modification (150) desdits tronçons de bord de fuite (14,24) desdits deux demi-profils (11,21), lesdits tronçons de bord de fuite (14,24) modifiés sont définis par un polynôme de degré 3 et ne comportent aucun point d'inflexion.

9. Méthode selon l'une quelconque des revendications 1 à 8,
**caractérisée en ce que** lors de ladite étape de modification (150) desdits tronçons de bord de fuite (14,24) desdits profils aérodynamiques (10) sur ladite zone extrémale (40), les points définissant lesdits tronçons de bord de fuite (14,24) desdits deux demi-profils (11,21) sont déplacés selon une loi parabolique.

10. Pale (1) pour aéronef (50) s'étendant selon une direction longitudinale (X) en envergure d'une première extrémité (3) à une seconde extrémité (4) et selon une direction transversale (Y) d'un bord d'attaque (5) vers un bord de fuite (6), ladite pale (1) comportant des sections transversales successives, chaque section transversale étant définie par un profil aérodynamique (10), chaque profil aérodynamique (10) étant défini par deux demi-profils (11,21) incluant un demi-profil d'extrados (11), et un demi-profil d'intrados (21), lesdits deux demi-profils (11,21) comportant chacun un tronçon de bord d'attaque (12,22), un tronçon intermédiaire (13,23) et un tronçon de bord de fuite (14,24), ladite première extrémité (3) étant destinée à être reliée à un moyeu d'un rotor (53), ladite seconde extrémité (4) étant destinée à être libre,
**caractérisée en ce que** ladite pale (1) est réalisée en utilisant lesdits profils aérodynamiques (10) modifiés par le procédé selon l'une quelconques des revendications 1 à 9.

11. Rotor (52) destiné à un aéronef (50), ledit rotor (52) comportant au moins deux pales (1) selon la revendication 10.

12. Giravion (50) comportant un fuselage (51) et au moins un rotor de sustentation (52),
**caractérisé en ce que** ledit au moins un rotor de sustentation (52) comporte au moins deux pales (1) selon la revendication 10.

## Patentansprüche

1. Verfahren zum Verbessern eines Blattes (1), wobei sich das Blatt (1) in einer Spannweiten-Längsrichtung (X) von einem ersten Ende (3) zu einem zweiten Ende (4) und in einer Querrichtung (Y) von einer Vorderkante (5) zu einer Hinterkante (6) erstreckt, wobei das Blatt (1) aufeinanderfolgende Querschnitte aufweist, wobei jeder Querschnitt durch ein aerodynamisches Profil (10) definiert ist, wobei jedes aerodynamische Profil (10) durch zwei Halbprofile (11, 21) definiert ist, darunter ein Oberseiten-Halbprofil (11) und ein Unterseiten-Halbprofil (21), wobei die beiden Halbprofile (11, 21) jeweils einen Vorderkantenabschnitt (12, 22), einen Zwischenabschnitt (13, 23) und einen Hinterkantenabschnitt (14, 24) aufweisen, wobei das erste Ende (3) vorgesehen ist, um mit einer Nabe (56) eines Rotors (52) verbunden zu werden, und das zweite Ende (4) vorgesehen ist, um frei zu sein,
**dadurch gekennzeichnet, dass** das Verfahren die folgenden Schritte umfasst:
- Definieren (110) eines Geradenabschnitts (16), der die Vorderkante (5) und die Hinterkante (6) des aerodynamischen Profils (10) verbindet,
- Verschieben (120) der Vorderkante (5) der aerodynamischen Profile (10), die sich an einem das zweite Ende (4) umfassenden Spannweiten-Endbereich (40) des Blattes (1) befinden, wobei das Verschieben (120) von dem Oberseitenhalbprofil (11) zu dem Unterseitenhalbprofil (21) hin über einen ersten Abstand d1 senkrecht zu dem Geradenabschnitt (16) erfolgt,
- Modifizieren (130) der Vorderkantenabschnitte (12, 22) der beiden Halbprofile (11, 21), die in dem Endbereich (4) die Vorderkante (5) mit den Zwischenabschnitten (13, 23) der beiden Halbprofile (11, 21) verbinden, und
- Herstellen (200) des Blattes (1) gemäß den modifizierten aerodynamischen Profilen (10).

2. Verfahren nach Anspruch 1,
**dadurch gekennzeichnet, dass** für eine Sehne c eines aerodynamischen Profils (10), die gleich einem Abstand zwischen der Vorderkante (5) und der Hinterkante (6) des aerodynamischen Profils (10) ist, der Abstand d1 für jedes Flügelprofil (10) in dem Endbereich (40) zwischen 2% und 8% der Sehne c des Flügelprofils (10) beträgt und die Vorderkantenabschnitte (12, 22) parallel zu dem Geradenabschnitt (16) einen zweiten Abstand d2 von der Vorderkante (5) überbrücken, der zwischen 5% und 50% der Sehne c ausmacht.

3. Verfahren nach einem der Ansprüche 1 bis 2,
**dadurch gekennzeichnet, dass** der Spannweiten-Endbereich (40) des Blattes (1) einen dritten Spannweiten-Abstand d3 zwischen 10% und 25% eines Radius des Blattes (1) einnimmt, wobei der Radius gleich dem Abstand zwischen dem Drehmittelpunkt des Blattes (1) und dem zweiten Ende (4) ist.

4. Verfahren nach einem der Ansprüche 1 bis 3,
**dadurch gekennzeichnet, dass** bei dem Schritt des Modifizierens (130) der Vorderkantenabschnitte (12, 22) der beiden Halbprofile (11, 21) die modifizierten Vorderkantenabschnitte (12, 22) durch ein Polynom dritten Grades definiert sind und frei von Wendepunkten sind.

5. Verfahren nach einem der Ansprüche 1 bis 4,
**dadurch gekennzeichnet, dass** bei dem Schritt des Modifizierens (130) der Vorderkantenabschnitte (12, 22) der aerodynamischen Profile (10) an dem Endbereich (40) die Punkte, die die Vorderkantenabschnitte (12, 22) der beiden Halbprofile (11, 21) definieren, gemäß einer Parabelregel verschoben werden.

6. Verfahren nach einem der Ansprüche 1 bis 5,
**dadurch gekennzeichnet, dass** das Verfahren die folgenden vor dem Schritt des Herstellens (200) durchgeführten Schritte umfasst:
- Verschieben (140) der Hinterkante (6) der aerodynamischen Profile (10) an dem Spannweiten-Endbereich (40) des Blattes (1), wobei das Verschieben (140) der Hinterkante (6) der aerodynamischen Profile (10) an dem Endbereich (40) von dem Unterseiten-Halbprofil (21) zu dem Oberseiten-Halbprofil (11) hin um einen vierten Abstand d4 senkrecht zu dem Geradenabschnitt (16) erfolgt, und
- Modifizieren (150) der Hinterkantenabschnitte (14, 24) der beiden Halbprofile (11, 21), die in dem Endbereich (4) die Zwischenabschnitte (13, 23) der beiden Halbprofile (11, 21) mit der Hinterkante (6) verbinden.

7. Verfahren nach Anspruch 6,
**dadurch gekennzeichnet, dass** der vierte Abstand d4 für jedes aerodynamische Profil (10) an dem Endbereich (40) zwischen 1% und 2% der Sehne c des aerodynamischen Profils (10) ausmacht und die Hinterkantenabschnitte (14, 24) einen fünften Abstand d5 parallel zu dem Geradenabschnitt (16) von der Hinterkante (6) abdecken, der zwischen 5% und 20% der Sehne c ausmacht.

8. Verfahren nach einem der Ansprüche 1 bis 7,
**dadurch gekennzeichnet, dass** bei dem Schritt des Modifizierens (150) der Hinterkantenabschnitte (14, 24) der beiden Halbprofile (11, 21) die modifizierten Hinterkantenabschnitte (14, 24) durch ein Polynom des Grades 3 definiert sind und frei von Wendepunkten sind.

9. Verfahren nach einem der Ansprüche 1 bis 8,
**dadurch gekennzeichnet, dass** bei dem Schritt des Modifizierens (150) der Hinterkantenabschnitte (14, 24) der aerodynamischen Profile (10) an dem Endbereich (40) die Punkte, die die Hinterkantenabschnitte (14, 24) der beiden Halbprofile (11, 21) definieren, gemäß einer Parabelregel verschoben werden.

10. Rotorblatt (1) für ein Luftfahrzeug (50), das sich in einer Spannweiten-Längsrichtung (X) von einem ersten Ende (3) zu einem zweiten Ende (4) und in einer Querrichtung (Y) von einer Vorderkante (5) zu einer Hinterkante (6) erstreckt, wobei das Rotorblatt (1) aufeinanderfolgende Querschnitte aufweist, wobei jeder Querschnitt durch ein aerodynamisches Profil (10) definiert ist, wobei jedes aerodynamische Profil (10) durch zwei Halbprofile (11, 12) definiert ist, darunter ein Oberseiten-Halbprofis (11) und ein Unterseiten-Halbprofil(21), wobei die beiden Halbprofile (11, 21) jeweils einen Vorderkantenabschnitt (12, 22), einen Zwischenabschnitt (13, 23) und einen Hinterkantenabschnitt (14, 24) aufweisen, wobei das erste Ende (3) vorgesehen ist, um mit einer Nabe eines Rotors (53) verbunden zu werden, und das zweite Ende (4) vorgesehen ist, um frei zu sein,
**dadurch gekennzeichnet, dass** das Blatt (1) unter Verwendung der durch das Verfahren nach einem beliebigen der Ansprüche 1 bis 9 modifizierten aerodynamischen Profile (10) hergestellt ist.

11. Rotor (52) für ein Luftfahrzeug (50), wobei der Rotor (52) mindestens zwei Blätter (1) nach Anspruch 10 aufweist.

12. Drehflügelflugzeug (50) mit einem Rumpf (51) und mindestens einem Auftriebsrotor (52),
**dadurch gekennzeichnet, dass** der mindestens eine Auftriebsrotor (52) mindestens zwei Blätter (1) nach Anspruch 10 aufweist.

## Claims

1. Method for improving the aerodynamic performance of a blade (1), said blade (1) extending along a longitudinal spanwise direction (X) from a first end (3) to a second end (4) and along a transversal direction (Y) from a leading edge (5) to a trailing edge (6), said blade (1) comprising successive transversal areas, each transversal area being defined by an aerodynamic profile (10), each aerodynamic profile (10) being defined by two half profiles (11, 21) including an upper surface half profile (11) and a lower surface half profile (21), said two half profiles (11, 21) each comprising a leading edge section (12, 22), an intermediate section (13, 23) and a trailing edge section (14, 24), said first end (3) being intended to be connected to a hub (56) of a rotor (52), said second end (4) being intended to be free,
**characterised in that** said method comprises the following steps:
- definition (110) of a line segment (16) connecting said leading edge (5) and said trailing edge (6) of said aerodynamic profile (10),
- movement (120) of said leading edge (5) of said aerodynamic profiles (10) situated on an extremal spanwise zone (40) of said blade (1) comprising said second end (4), said movement (120) being made from said upper surface half profile (11) to said lower surface half profile (21) over a first distance d1 perpendicularly to said line segment (16),
- modification (130) of said leading edge sections (12, 22) of said two half profiles (11, 21) connecting said leading edge (5) to said intermediate sections (13, 23) of said two half profiles (11, 21) on said extremal zone (4), and
- manufacture (200) of said blade (1) according to said modified aerodynamic profiles (10).

2. Method according to claim 1,
**characterised in that** a chord *c* of an aerodynamic profile (10) being equal to a distance between said leading edge (5) and said trailing edge (6) of said aerodynamic profile (10), said distance *d1* for each aerodynamic profile (10) on said extremal zone (40) is between 2% and 8% of said chord *c* of said aerodynamic profile (10) and said leading edge sections (12, 22) cover a second distance *d2* parallel to said line segment (16) from said leading edge (5) between 5% and 50% of said chord *c.*

3. Method according to either one of claims 1 to 2,
**characterised in that** said spanwise extremal zone (40) of said blade (1) covers a third spanwise distance *d3* between 10% and 25% of a radius of said blade (1), said radius being equal to the distance between the centre of rotation of said blade (1) and said second end (4).

4. Method according to any one of claims 1 to 3,
**characterised in that** at said step (130) modifying said leading edge sections (12, 22) of said two half profiles (11, 21), said modified leading edge sections (12, 22) are defined by a polynomial of degree 3 and comprise no inflection point.

5. Method according to any one of claims 1 to 4,
**characterised in that** at said step (130) modifying said leading edge sections (12, 22) of said aerodynamic profiles (10) on said extremal zone (40), the points defining said leading edge sections (12, 22) of said two half profiles (11, 21) are moved according to a parabolic law.

6. Method according to any one of claims 1 to 5,
**characterised in that** said method comprises the following steps performed before the manufacturing step (200):
- movement (140) of said trailing edge (6) of said aerodynamic profiles (10) on said spanwise extremal zone (40) of said blade (1), said movement (140) of said trailing edge (6) of said aerodynamic profiles (10) on said extremal zone (40) being performed from said lower surface half profile (21) to said upper surface half profile (11) over a fourth distance d4 perpendicularly to said line segment (16), and
- modification (150) of said trailing edge sections (14, 24) of said two half profiles (11, 21) connecting said intermediate sections (13, 23) of said two half profiles (11, 21) to said trailing edge (6) on said extremal zone (4).

7. Method according to claim 6,
**characterised in that** said fourth distance *d4* for each aerodynamic profile (10) on said extremal zone (40) is between 1% and 2% of said chord c of said aerodynamic profile (10) and said trailing edge sections (14, 24) cover a fifth distance *d5* parallel to said line segment (16) from said trailing edge (6) of between 5% and 20% of said chord *c.*

8. Method according to any one of claims 1 to 7,
**characterised in that** at said step (150) of modifying said trailing edge sections (14, 24) of said two half profiles (11, 21), said modified trailing edge sections (14, 24) are defined by a polynomial of degree 3 and comprise no inflection point.

9. Method according to any one of claims 1 to 8,
**characterised in that** at said step (150) modifying said trailing edge sections (14, 24) of said aerodynamic profiles (10) on said extremal zone (40), the points defining said trailing edge sections (14, 24) of said two half profiles (11, 21) are moved according to a parabolic law.

10. Blade (1) for aircraft (50) extending along a longitudinal spanwise direction (X) from a first end (3) to a second end (4) and along a transversal direction (Y) from a leading edge (5) to a trailing edge (6), said blade (1) comprising successive transversal areas, each transversal area being defined by an aerodynamic profile (10), each aerodynamic profile (10) being defined by two half profiles (11, 21) including an upper surface half profile (11) and a lower surface half profile (21), said two half profiles (11, 21) each comprising a leading edge section (12, 22), an intermediate section (13, 23) and a trailing edge section (14, 24), said first end (3) being intended to be connected to a hub of a rotor (53), said second end (4) being intended to be free,
**characterised in that** said blade (1) is made using said aerodynamic profiles (10) modified by the method according to any one of claims 1 to 9.

11. Rotor (52) intended for an aircraft (50), said rotor (52) comprising at least two blades (1) according to claim 10.

12. Rotorcraft (50) comprising a fuselage (51) and at least one rotor for lift (52),
**characterised in that** said at least one rotor for lift (52) comprises at least two blades (1) according to claim 10.
